# EUROPEAN PATENT APPLICATION

(11) **EP 4 559 732 A1**
(43) Date of publication of application: **28.05.2025**
(21) Application number: 22951856.8
(22) Date of filing: 28.12.2022
(51) Int. Cl.: B60L 53/22

(54) **APPARATUS USING DUAL-WOUND MOTOR CONTROL TOPOLOGY FOR EQUIVALENT IMPLEMENTATION OF CHARGING BY VEHICLE-MOUNTED CHARGER**

(30) Priority: 21.07.2022 CN 202210856461
(71) Applicant: Zhejiang Leappower Technology Co., Ltd, Hangzhou, Zhejiang 310000 (CN); Zhejiang Leapmotor Technology Co., Ltd, Hangzhou, Zhejiang 310051 (CN)
(72) Inventor: JI, Feifan, Hangzhou, Zhejiang 310051 (CN); CHEN, Xingcai, Hangzhou, Zhejiang 310051 (CN)
(74) Representative: Herrero & Asociados, S.L.
(86) International application number: PCT/CN2022/142745
(87) International publication number: WO 2024/016601

(57) **Abstract**

Disclosed is an apparatus of using a double-winding motor control topology for equivalent implementation of charging by a vehicle-mounted charger. The apparatus comprises a battery module, a switch assembly, a first-phase bridge arm, a second-phase bridge arm, a third-phase bridge arm, a fourth-phase bridge arm, a fifth-phase bridge arm, a sixth-phase bridge arm, a seventh-phase bridge arm, a capacitor C1, a capacitor C2, a first winding, a second winding, a third winding, a fourth winding, a fifth winding, and a sixth winding. A first working mode and a second working mode are formed by controlling the on and off of the switch assembly. The first working mode is a double-winding motor control mode, in which the switch assembly is controlled such that the first-phase bridge arm is in a cut-off state, and the capacitor C1, the second-phase bridge arm, the third-phase bridge arm and the fourth-phase bridge arm form a first double-winding motor power control module. According to the present invention, a vehicle-mounted charger does not need to be regarded as an independent module, and a dual-wound motor control topology is reused to a great extent, so that one topology can achieve two functions.

## Description

### TECHNICAL FIELD

The present disclosure relates to the field of new energy vehicles, and in particular to an apparatus for equivalent implementation of charging by vehicle-mounted charger based on dual-winding motor control topology.

### BACKGROUND

A battery is an important factor restricting the development of an electric vehicle. Compared with a lead acid battery and a nickel battery, a lithium battery has the advantages of high energy density, long average life, working voltage of a battery cell, high current, high power density, non-toxic, low cost, etc., and the lithium battery is widely used in the field of electric vehicles. Currently, a user of the electric vehicle is generally concerned about an issue of battery charging.

A charging pile is an off-board charging device, and is usually installed in a fixed operation site. The charging pile is capable of directly providing a direct current (DC) voltage to a battery pack of the electric vehicle. The charging pile has the advantages of high charging power and fast charging speed. However, a charging place of the charging pile is fixed, resulting in the poor portability. Compared with the charging pile, a vehicle-mounted charger may provide a more convenient charging mode.

Due to limited space inside the vehicle, the vehicle-mounted charger needs to have a small volume and a light weight. In addition, from the user's perspective, the vehicle-mounted charger needs to have high charging efficiency. At the same time, it is also an important issue for research and development personnel to consider: meeting user functional requirements while reducing hardware costs as much as possible.

Currently, the vehicle-mounted charger needs to be integrated as a separate module and is added to a hardware configuration of the electric vehicle. A technical solution in the related art is mainly aimed at the research of the module as a whole. Therefore, as described above, it is expected to obtain an alternative solution of a novel vehicle-mounted charger, such that it may be possible to effectively solve the space limitations of the electric vehicle, reduce the overall hardware costs, and improve the charging efficiency as much as possible.

For example, Chinese patent application NO. 202110732515.0 discloses a vehicle-mounted integrated charger driving circuit based on a dual three-phase permanent magnet synchronous motor driving system. The system works in multiple functional modes such as an electric driving mode, a charging mode, a vehicle-to-grid (V2G) mode, etc. Both a high-power electric drive inverter and a motor winding may be reused without adding other components, such that the costs may be reduced. However, in the technical solution provided in the above Chinese patent application, the charging efficiency is low, and a large amount of heat may be generated.

### SUMMARY OF THE DISCLOSURE

In order to solve a problem of large space occupation and low charging efficiency due to the need to arrange a vehicle-mounted separately charger in the related art, some embodiments of the present disclosure may provide an apparatus for equivalent implementation of charging by vehicle-mounted charger based on dual-winding motor control topology. In the apparatus, a set of hardware devices may be reused to simultaneously realize the functional requirement of dual-winding motor controlling and vehicle-mounted charger charging, such that device space may be saved and there is a considerable cost advantage, and the charging efficiency may be improved.

In order to solve the above technical problems, a technical solution adopted by the present disclosure is to provide an apparatus for equivalent implementation of charging by vehicle-mounted charger based on dual-winding motor control topology. The apparatus includes: a battery module, a switch assembly, a first-phase bridge arm, a second-phase bridge arm, a third-phase bridge arm, a fourth-phase bridge arm, a fifth-phase bridge arm, a sixth-phase bridge arm, a seventh-phase bridge arm, a first capacitance C1, a second capacitance C2, a first winding, a second winding, a third winding, a fourth winding, a fifth winding, and a sixth winding, where a first working mode and a second working mode are formed by controlling the switch assembly to be switched on or switched off. The first working mode is a dual-winding motor control mode, in which the switch assembly is controlled to implement: the first-phase bridge arm is in a cut-off state, the first capacitance C1, the second-phase bridge arm, the third-phase bridge arm, and the fourth-phase bridge arm form a first dual-winding motor power control module, the first winding, the second winding, and the third winding form a first dual-winding motor winding module, the second capacitance C2, the fifth-phase bridge arm, the sixth-phase bridge arm, and the seventh-phase bridge arm form a second dual-winding motor power control module, and the fourth winding, the fifth winding, and the sixth winding form a second dual-winding motor winding module; and in the dual-winding motor control mode, the battery module is configured to output power supply to the first dual-winding motor power control module and the second dual-winding motor power control module, the first dual-winding motor power control module is configured to output a pulse width modulation (PWM) signal to the first dual-winding motor winding module, the first dual-winding motor winding module is configured to drive a motor to work, the second dual-winding motor power control module is configured to output another PWM signal to the second dual-winding motor winding module, and the second dual-winding motor winding module is configured to drive the motor to work. The second working mode is a charging mode of the vehicle-mounted charger, in which the switch assembly is controlled to implement: an end of the first winding is connected to one of two ends of mains supply and a middle point of the first-phase bridge arm is connected to the other one of two ends of the mains supply, the first-phase bridge arm, the second-phase bridge arm, and the first capacitor C1 form a power factor correction (PFC) inverter circuit module, the third-phase bridge arm and the fourth-phase bridge arm form an inverter module, the second winding, the third winding, the fifth winding, and the sixth winding form an isolation transformer module, the sixth-phase bridge arm, the seventh-phase bridge arm, and the second capacitor C2 form a rectification module; and the fifth-phase bridge arm is in a cut-off state, in the charging mode of the vehicle-mounted charger, the mains supply is input into the PFC inverter circuit module, and is input into the inverter module after power correction is performed on the mains supply by the PFC inverter circuit module, a direct current (DC) is converted into an alternating current (AC), the AC is input into the isolation transformer module to boost voltage, a boosted current is input into the rectification module, and the AC is converted into the DC to charge the battery module.

In some embodiments, the switch assembly includes a first relay k1, a second relay K2, a third relay K3, a fourth relay K4, a fifth relay K5, and a sixth relay K6. In the dual-winding motor control mode, the first relay K1, the second relay K2, the fifth relay K5, and the sixth relay K6 are controlled to be closed together, and the third relay K3 and the fourth relay K4 are controlled to be disconnected. In the charging mode of the vehicle-mounted charger, the first relay K1, the second relay K2, the fifth relay K5, and the sixth relay K6 are controlled to be disconnected, and the third relay K3 and the fourth relay K4 are controlled to be closed together.

In some embodiments, the second winding and the third winding are connected in series to form a primary side of the isolation transformer, and the fifth winding and the sixth winding are connected in series to form a secondary side of the isolation transformer.

In some embodiments, each of the first winding, the second winding, and the third winding is a symmetrical winding, and the first winding, the second winding, and the third winding are connected in a star-connection mode to form the first dual-winding motor winding module.

In some embodiments, each of the fourth winding, the fifth winding, and the sixth winding is a symmetrical winding, and the fourth winding, the fifth winding, and the sixth winding are connected in a star-connection mode to form the second dual-winding motor winding module.

In some embodiments, the fifth relay K5 is arranged between a star-shaped connection middle point of the first dual-winding motor winding module and the first winding, and the sixth relay K6 is arranged between a middle point of the fifth-phase bridge arm and the fourth winding, such that the first dual-winding motor winding module in the dual-winding motor control mode and the winding in the charging mode of the vehicle-mounted charger are connected in series to form a structure switching of the isolation transformer by controlling the fifth relay K5 and the sixth relay K6 to be switched on or switched off.

In some embodiments, the third relay K3 is arranged between the middle point of the first-phase bridge arm and a L end of the mains supply, the fourth relay K4 is arranged between the first winding and a N end of the mains supply, a double-pole double-throw switch is formed by the fourth relay K4 and the fifth relay K5, and the fifth relay K5 and the sixth relay K6 are controlled to be switched on to input an AC power input of the mains supply in the charging mode of the vehicle-mounted charger.

In some embodiments, the first winding, the second winding, and the third winding have a same electrical resistance and inductance characteristic.

In some embodiments, the fourth winding, the fifth winding, and the sixth winding have a same electrical resistance and inductance characteristic.

The apparatus provided by the embodiments of the present disclosure has the following technical effects. There is no need to separately consider the vehicle-mounted charger as an independent module, and a hardware topology under the dual-winding motor control may be greatly reused, so as to realize dual functions with a topology. Further, a component of the dual-winding motor control topology may be reused to realize the vehicle charging, so as to effectively improve the charging efficiency. In addition, in the process of hardware transformation, only a few power switch components and a few relay components are introduced, and functions of the dual-winding motor control and the vehicle-mounted charger charging may be realized at the same time. Therefore, the costs may be greatly reduced as a whole, and the functions of the dual-winding motor control and the vehicle-mounted charger charging are independent of each other, so as to reduce the complexity of actual control, and thus the apparatus has a simple structure and low costs.

### BRIEF DESCRIPTION OF THE DRAWINGS

FIG. 1 is a structural schematic view of a topological structure in a dual-winding motor control mode according to an embodiment of the present disclosure.
FIG. 2 is a structural schematic view of a topological structure in a charging mode of a vehicle-mounted charger according to an embodiment of the present disclosure.
FIG. 3 is a schematic view of a relay control operating condition for switching between the dual-winding motor control mode and the charging mode of the vehicle-mounted charger according to an embodiment of the present disclosure.

### DETAILED DESCRIPTION

The embodiments of the present disclosure may be described as follows through some specific examples, and those skilled in the art may easily understand other advantages and effects of the present disclosure from the contents disclosed in the description. The present disclosure may further be implemented or applied in other different specific embodiments, and various details in the description may further be modified or changed within the scope of the claims of the present disclosure based on different views and applications. It should be noted that if without conflict, the following embodiments and features in the embodiments may be combined with each other.

In order to make the purpose, technical solutions and advantages of the present disclosure clearer and more understandable, the application is described in further detail below by referring to the accompanying drawings and embodiments. It shall be understood that specific embodiments described herein are intended to explain the present disclosure only and are not intended to limit the present disclosure.

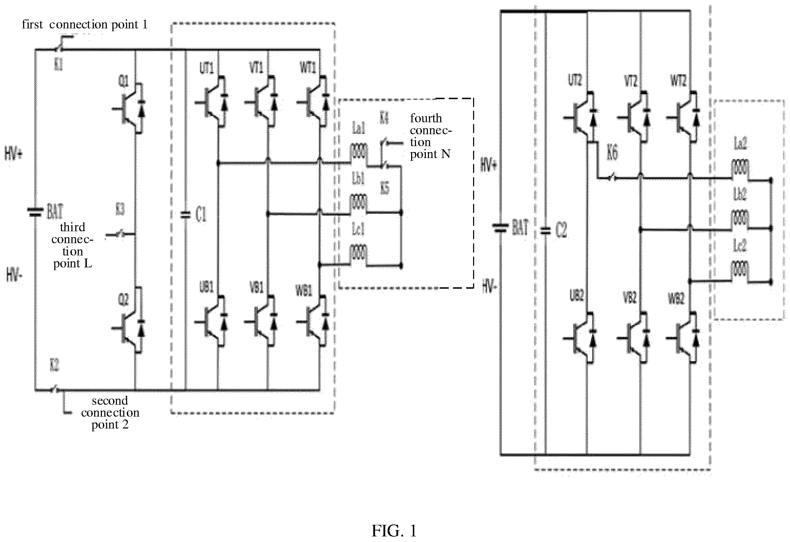

In the embodiments, as shown in FIG. 1, FIG. 1 illustrates a structural schematic view of an apparatus for equivalent implementation of charging by vehicle-mounted charger based on dual-winding motor control topology. In a dual-winding motor control mode, the apparatus includes a battery module, a first dual-winding motor power control module, a first dual-winding motor winding module, a second dual-winding motor power control module, and a second dual-winding motor winding module.

In the battery module, a positive pole and a negative pole of a battery are connected to a first connection point 1 and a second connection point 2, respectively, and two three-phase inverter circuits are led out respectively. Two ends of one of the two three-phase inverter circuits are connected to an upper end and a lower end of the first dual-winding motor power control module, respectively. Two ends of the other one of the two three-phase inverter circuits are connected to an upper end and a lower end of the second dual-winding motor power control module, respectively. In this way, a DC voltage may be simultaneously provided for two three-phase inverter circuits. One of the two three-phase inverter circuits is arranged between the battery in the battery module and the first capacitor C1 in the first dual-winding motor power control module, and the one of the two three-phase inverter circuits and a pair of an upper bridge arm Q1 and a lower bridge arm Q2 are connected in parallel. Each of the upper bridge arm Q1 and the lower bridge arm Q2 is formed by connecting a power switch tube to a freewheeling diode. A first relay K1 is arranged in a path connected to an upper end of the upper bridge arm Q1, and the first connection point 1 is led out. A second relay K2 is arranged in a path connected to a lower end of the lower bridge arm Q2, and the second connection point 2 is led out. A third relay K3 is led out from a connection middle point between the upper bridge arm Q1 and the lower bridge arm Q2, and a third connection point L is led out. The third connection point L is connected to a L end of a mains supply module. In addition, in the other one of the two three-phase inverter circuits, there is no additional configuration of a relevant power component and a relay switch component. In the dual-winding motor control mode, the first relay K1 and the second relay K2 are controlled to be closed together, the third relay K3 is controlled to be disconnected, and the upper bridge arm Q1 and the lower bridge arm Q2 are controlled to be in a cut-off state. The first-phase bridge arm is formed by the upper bridge arm Q1 and the lower bridge arm Q2. In the dual-winding motor control mode, the upper bridge arm Q1 and the lower bridge arm Q2 are slightly redundant. However, the upper bridge arm Q1 and the lower bridge arm Q2 are indispensable components in the charging mode of the vehicle-mounted charger.

The first dual-winding motor power control module includes a first capacitor C1 and a three-phase bridge arm. An upper end and a lower end of the first capacitor C1 are connected to an upper end and a lower end of a three-phase inverter circuit bridge arm, respectively. The three-phase inverter circuit bridge arm includes a second-phase bridge arm, a third-phase bridge arm, and a fourth-phase bridge arm. Each of the second-phase bridge arm, the third-phase bridge arm, and the fourth-phase bridge arm is divided into two bridge arms. Each of the two bridge arms is formed by connecting a power switch tube to a freewheeling diode. A first basic module UT1 is served as an upper bridge arm of the first-phase bridge arm, and a second basic module bridge armUB1 is served as a lower bridge arm of the second-phase bridge arm. The first basic module UT1 and the second basic module UB1 are connected to each other. A middle point of the second-phase bridge arm is connected to a first winding La1 of the first dual-winding motor winding module. A third basic module VT1 is served as an upper bridge arm of the second-phase bridge arm, and a fourth basic module VB1 is served as a lower bridge arm of the second-phase bridge arm. The third basic module VT1 and the fourth basic module VB 1 are connected to each other. A middle point of the third-phase bridge arm is connected to a second winding Lb1 of the first dual-winding motor winding module. A fifth basic module WT1 is served as an upper bridge arm of the third-phase bridge arm, and a sixth basic module WB 1 is served as a lower bridge arm of the third-phase bridge arm. The fifth basic module WT1 and the sixth basic module WB1 are connected to each other. A middle point of the fourth-phase bridge arm is connected to a third winding Lc1 of the first dual-winding motor winding module. Each of the middle points of the three-phase bridge arm, i.e., the second-phase bridge arm, the third-phase bridge arm, and the fourth-phase bridge arm, is connected to each of the three-phase windings of the first dual-winding motor winding module, i.e., the first winding, the second winding, the third winding. By controlling a gate signal of each bridge arm power tube, the first dual-winding motor power control module is configured to output a pulse width modulation (PWM) wave to drive the first dual-winding motor winding module.

The first dual-winding motor winding module includes a three-phase symmetrical winding with the first winding La1, the second winding Lb1, and the third winding Lc1, and the first winding La1, the second winding Lb1, and the third winding Lc1 are connected in a star-connection mode. The first winding La1, the second winding Lb1, and the third winding Lc1 have a same electrical resistance and inductance characteristic. A double-pole double-throw switch is arranged in a link connected to the first winding La1 and a star-shaped connection middle point. A fifth relay K5 is configured to control to connect the first winding La1 to the star-shaped connection middle point. A fourth relay K4 is configured to control to connect the first winding La1 to a fourth connection point N, and a fourth connection point N is connected to a N end of the mains supply module. The fourth relay K4 is disconnected, and the fifth relay K5 is closed, so as to ensure the winding module to operate normally in the motor driving mode.

The second dual-winding motor power control module includes a second capacitor C2 and a three-phase bridge arm. The three-phase bridge arm includes a fifth-phase bridge arm, a sixth-phase bridge arm, and a seventh-phase bridge arm. Each of the fifth-phase bridge arm, the sixth-phase bridge arm, and the seventh-phase bridge arm is divided into two bridge arms. Each of the two bridge arms is formed by connecting a power switch tube to a freewheeling diode. A seventh basic module UT2 is served as an upper bridge arm of the fifth-phase bridge arm, and an eighth basic module UB2 is served as a lower bridge arm of the fifth-phase bridge arm. The seventh basic module UT2 and the eighth basic module UB2 are connected to each other. A middle point of the fifth-phase bridge arm is connected to a fourth group La2 of the second dual-winding motor winding module. A sixth relay K6 is arranged in a path. A ninth basic module VT2 is served as an upper bridge arm of the sixth-phase bridge arm, and a tenth basic module VB2 is served as a lower bridge arm of the sixth-phase bridge arm. The ninth basic module VT2 and the tenth basic module VB2 are connected to each other. A middle point of the sixth-phase bridge arm is connected to a fifth winding Lb2 of the second dual-winding motor winding module. An eleventh basic module WT2 is served as an upper bridge arm of the seventh-phase bridge arm, and a twelfth basic module WB2 is served as a lower bridge arm of the seventh-phase bridge arm. The eleventh basic module WT2 and the twelfth basic module WB2 are connected to each other. A middle point of the seventh-phase bridge arm is connected to a sixth winding Lc2 of the second dual-winding motor winding module. The sixth relay K6 is controlled to be closed together. Each of the middle points of the three-phase bridge arm, i.e., the fifth-phase bridge arm, the sixth-phase bridge arm, and the seventh-phase bridge arm, is connected to each of the three-phase windings of the second dual-winding motor winding module, i.e., the fourth winding, the fifth winding, the sixth winding. By controlling a gate signal of each bridge arm power tube, the second dual-winding motor power control module is configured to output a PWM wave to drive the second dual-winding motor winding module.

The second dual-winding motor winding module includes a three-phase symmetrical winding with the fourth winding La2, the fifth winding Lb2, and the sixth winding Lc2, and the fourth winding La2, the fifth winding Lb2, and the sixth winding Lc2 are connected in a star-connection mode. The fourth winding La2, the fifth winding Lb2 and the sixth winding Lc2 have a same electrical resistance and inductance characteristic and are controlled by the PWM driving sent by the second dual-winding motor power control module.

In the dual-winding motor control mode, the battery module is configured to drive and control the first dual-winding motor winding module through the first dual-winding motor power control module, and at the same time, the battery module is further configured to drive and control the second dual-winding motor winding module through the second dual-winding motor power control module.

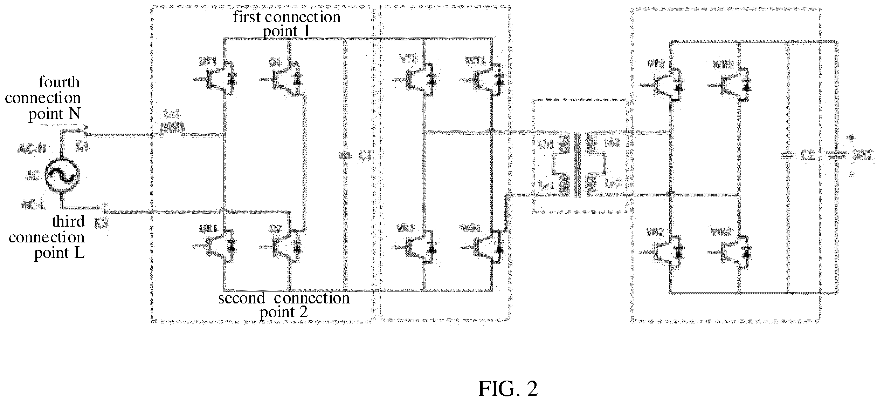

As shown in FIG. 2, FIG. 2 is a structural schematic view of a topological structure in a charging mode of a vehicle-mounted charger according to an embodiment of the present disclosure. The topological structure may include a mains supply module, a power factor correction (PFC) inverter circuit module, an inverter module, an isolation transformer module, a rectification module, and a battery module.

In the mains supply module, in the charging mode of the vehicle-mounted charger, the third relay k3 and the fourth relay k4 are controlled to be closed together, the third relay k3 and the fourth relay k4 are controlled to be disconnected, the N end of the mains supply module is connected to the connection point N, and the L end of the mains supply module is connected to the connection point L. in this way, it may be possible to realize power transmission to a PFC inverter circuit.

In the PFC inverter circuit module, the fifth relay K5 is controlled to be disconnected, so that the first winding La1 is separated from the star-connection mode in a motor control mode, and the first winding La1 is placed in the PFC inverter circuit module as a separate/independent resistive inductive component. The bridge arm Q1 and the bridge arm Q2 are switched from the cut-off state in the dual-winding motor control mode to an enabled state. The bridge arm UT1, the bridge arm UB1, the bridge arm Q1, and the bridge arm Q2 form two-phase bridge arm, and an upper end and a lower end of the two-phase bridge arm are connected in parallel with the first capacitor C1 at the same time. Each of the bridge arm UT1, the bridge arm UB1, the bridge arm Q1, and the bridge arm Q2 is switched on and off by a gate signal thereof, so as to jointly realize inverter boost of the PFC.

In the inverter module, the bridge arm VT1 and the bridge arm VB1 form the third-phase bridge arm, and the bridge arm WT1 and the bridge arm WB 1 form the fourth-phase bridge arm. The third-phase bridge arm and the fourth-phase bridge arm form a two-phase bridge arm. An inverter function is realized by controlling a gate signal of the power switch tube of each of the two-phase bridge arm to output a high-frequency alternating voltage.

In the isolation transformer module, the fifth relay K5 and the sixth relay K6 are controlled to be disconnected, so that the first winding La1 and the fourth winding La2 are separated from the star-connection mode in the motor control mode. The second winding Lb1 and the third winding Lc1 are automatically connected in series to form a primary side of the transformer. The fifth winding Lb2 and the sixth winding Lc2 are automatically connected in series to form a secondary side of the transformer. The transformer transformation function of the isolation transformer may be realized by reasonably configuring turns of the two groups of windings. Turns of the three-phase winding in the first dual-winding motor winding module are different from those of the three-phase winding in the second dual-winding motor winding module, which is configured to control a turn ratio of the primary side to the secondary side of the isolation transformer module when switching to the charging mode of the vehicle-mounted charger, so as to realize the step-up function of the module. In addition, the number of winding turns is reasonably configured according to actual demands, so as to realize the boosting requirement of the isolation transformer module.

In the rectification module, the bridge arm VT2 and the bridge arm VB2 form the sixth-phase bridge arm, and the bridge arm WT2 and the bridge arm WB2 form the seventh-phase bridge arm. The sixth-phase bridge arm and the seventh-phase bridge arm form another two-phase bridge arm. An upper end and a lower end of the another two-phase bridge arm are connected to two ends of the second capacitor C2, respectively. The rectification function is realized by controlling the gate signal of the power switch tube of each of the two-phase bridge arm, and the DC charging voltage is output to charge the battery.

In the battery module, at this time, the first relay K1 and the second relay K2 are controlled to be disconnected, and the battery is only structurally connected to the rectification module to accept an output power of the battery for charging.

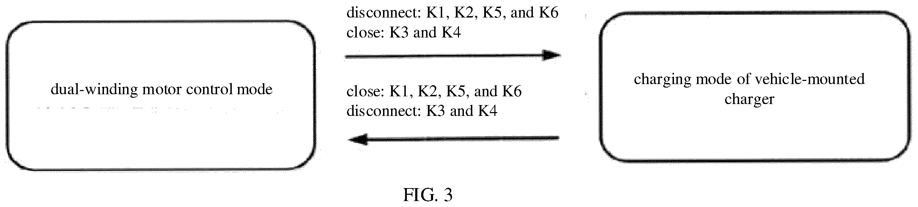

In conclusion, FIG. 3 illustrates a schematic view of a relay control operating condition for switching between the dual-winding motor control mode and the charging mode of the vehicle-mounted charger. In the charging mode of the vehicle-mounted charger, the first relay K1, the second relay K2, the fifth relay K5, and the sixth relay K6 are controlled to be disconnected, and the relay third K3 and the fourth relay K4 are controlled to be closed together. In the dual-winding motor control mode, the first relay K1, the second relay K2, the fifth relay K5, and the sixth relay K6 are controlled to be closed together, and the third relay K3 and the fourth relay K4 are controlled to be disconnected.

All the power switch tubes and all the relay switch included in the topological structure provided in the embodiments of the present disclosure may be replaced with any components with similar switching characteristics.

The above embodiments are only a preferred solution of the present disclosure and do not limit the present disclosure in any form. There are other variations and modifications without exceeding the technical solution described in the claims.

## Claims

1. An apparatus for equivalent implementation of charging by vehicle-mounted charger based on dual-winding motor control topology, comprising:
a battery module, a switch assembly, a first-phase bridge arm, a second-phase bridge arm, a third-phase bridge arm, a fourth-phase bridge arm, a fifth-phase bridge arm, a sixth-phase bridge arm, a seventh-phase bridge arm, a first capacitance C1, a second capacitance C2, a first winding, a second winding, a third winding, a fourth winding, a fifth winding, and a sixth winding, wherein a first working mode and a second working mode are formed by controlling the switch assembly to be switched on or switched off;
wherein the first working mode is a dual-winding motor control mode, in which the switch assembly is controlled to implement: the first-phase bridge arm is in a cut-off state, the capacitance C1, the second-phase bridge arm, the third-phase bridge arm, and the fourth-phase bridge arm form a first dual-winding motor power control module, the first winding, the second winding, and the third winding form a first dual-winding motor winding module, the second capacitance C2, the fifth-phase bridge arm, the sixth-phase bridge arm, and the seventh-phase bridge arm form a second dual-winding motor power control module, and the fourth winding, the fifth winding, and the sixth winding form a second dual-winding motor winding module; and in the dual-winding motor control mode, the battery module is configured to output power supply to the first dual-winding motor power control module and the second dual-winding motor power control module, the first dual-winding motor power control module is configured to output a pulse width modulation (PWM) signal to the first dual-winding motor winding module, the first dual-winding motor winding module is configured to drive a motor to work, the second dual-winding motor power control module is configured to output another PWM signal to the second dual-winding motor winding module, and the second dual-winding motor winding module is configured to drive the motor to work;
the second working mode is a charging mode of the vehicle-mounted charger, in which the switch assembly is controlled to implement: an end of the first winding is connected to one of two ends of mains supply and a middle point of the first-phase bridge arm is connected to the other one of two ends of the mains supply, the first-phase bridge arm, the second-phase bridge arm, and the first capacitor C1 form a power factor correction (PFC) inverter circuit module, the third-phase bridge arm and the fourth-phase bridge arm form an inverter module, the second winding, the third winding, the fifth winding, and the sixth winding form an isolation transformer module, the sixth-phase bridge arm, the seventh-phase bridge arm, and the second capacitor C2 form a rectification module; and the fifth-phase bridge arm is in a cut-off state, in the charging mode of the vehicle-mounted charger, the mains supply is input into the PFC inverter circuit module, and is input into the inverter module after power correction is performed on the mains supply by the PFC inverter circuit module, a direct current (DC) is converted into an alternating current (AC), the AC is input into the isolation transformer module to boost voltage, a boosted current is input into the rectification module, and the AC is converted into the DC to charge the battery module.

2. The apparatus according to claim 1, wherein the switch assembly comprises a first relay K1, a second relay K2, a third relay K3, a fourth relay K4, a fifth relay K5, and a sixth relay K6;
in the dual-winding motor control mode, the first relay K1, the second relay K2, the fifth relay K5, and the sixth relay K6 are controlled to be closed together, and the third relay K3 and the fourth relay K4 are controlled to be disconnected; and
in the charging mode of the vehicle-mounted charger, the first relay K1, the second relay K2, the fifth relay K5, and the sixth relay K6 are controlled to be disconnected, and the third relay K3 and the fourth relay K4 are controlled to be closed together.

3. The apparatus according to claim 1 or 2, wherein the second winding and the third winding are connected in series to form a primary side of the isolation transformer, and the fifth winding and the sixth winding are connected in series to form a secondary side of the isolation transformer.

4. The apparatus according to claim 2, wherein each of the first winding, the second winding, and the third winding is a symmetrical winding, and the first winding, the second winding, and the third winding are connected in a star-connection mode to form the first dual-winding motor winding module.

5. The apparatus according to claim 4, wherein each of the fourth winding, the fifth winding, and the sixth winding is a symmetrical winding, and the fourth winding, the fifth winding, and the sixth winding are connected in a star-connection mode to form the second dual-winding motor winding module.

6. The apparatus according to claim 5, wherein the fifth relay K5 is arranged between a star-shaped connection middle point of the first dual-winding motor winding module and the first winding, and the sixth relay K6 is arranged between a middle point of the fifth-phase bridge arm and the fourth winding, such that the first dual-winding motor winding module in the dual-winding motor control mode and the winding in the charging mode of the vehicle-mounted charger are connected in series to form a structure switching of the isolation transformer by controlling the fifth relay K5 and the sixth relay K6 to be switched on or switched off.

7. The apparatus according to claim 2, wherein the third relay K3 is arranged between the middle point of the first-phase bridge arm and a L end of the mains supply, the fourth relay K4 is arranged between the first winding and a N end of the mains supply, a double-pole double-throw switch is formed by the fourth relay K4 and the fifth relay K5, and the fifth relay K5 and the sixth relay K6 are controlled to be switched on to input an AC power input of the mains supply in the charging mode of the vehicle-mounted charger.

8. The apparatus according to claim 1, wherein the first winding, the second winding, and the third winding have a same electrical resistance and inductance characteristic.

9. The apparatus according to claim 1, wherein the fourth winding, the fifth winding, and the sixth winding have a same electrical resistance and inductance characteristic.
